# EUROPEAN PATENT SPECIFICATION

(11) **EP 3 826 842 B1**
(45) Date of publication and mention of the grant of the patent: **11.09.2024**
(21) Application number: 19745737.7
(22) Date of filing: 25.07.2019
(51) Int. Cl.: B32B 17/10

(54) **PROCESS**
VERFAHREN
PROCÉDÉ

(30) Priority: 25.07.2018 EP 18425058
(43) Date of publication of application: 02.06.2021
(73) Proprietor: Pilkington Group Limited, Ormskirk, Lancashire L40 5UF (GB)
(72) Inventor: DURBIN, Neil John, Windle, St Helens, Merseyside WA10 6EQ (GB); WINSTANLEY, Neil, Windle, St Helens, Merseyside WA10 6HL (GB); RONCI, Marco, 66050 San Salvo Marin, Chieti (IT)
(74) Representative: Teasdale, Nicola Joanne
(86) International application number: PCT/GB2019/052086
(87) International publication number: WO 2020/021269

(56) References cited:
- WO-A1-2013/107706
- DE-A1- 102013 012 648
- US-A1- 2004 231 778
- US-A1- 2014 141 206
- US-A1- 2017 021 597

## Description

The present invention relates to a process for preparing a laminated glazing, a laminated glazing and to the use of same in a vehicle. More specifically, the present invention relates to a process for preparing a light weight laminated glazing and to the use of same in a vehicle, especially as a side window.

It is well known that glazings are used as windows in automotive vehicles. Much attention is given to vehicle windscreens, but vehicle side windows, rear windows and sunroofs are equally important. In the art, a vehicle side window may be referred to as a vehicle side light. Typically, vehicles have at least one, usually two, movable side windows, such as one on each side of the vehicle, that is, the passenger side and the driver side. In addition to movable side windows, there may be one or more fixed side windows, for example front or rear quarter lights.

For example, in the driver's door there is usually a side window that is movable in a vertical direction by actuation of a suitable winder mechanism. The winder mechanism may be manually or electrically operated and has at least one element in mechanical communication with the side window to move the side window within a vehicle aperture defining the driver's side window.

It is known that a vehicle side window may comprise a single monolithic sheet of thermally toughened glass. When such a thermally toughened sheet of glass is broken, the integrity of the vehicle side window is lost as the sheet of glass is broken into many small fragments. Likewise, single monolithic sheets of thermally toughened glass may be insufficient to retain a passenger within the vehicle in the event of a collision. This has led to the use of laminated glazings in vehicles.

Laminated vehicle glazings usually comprise two shaped sheets of glass joined by at least one adhesive layer, such as polyvinyl butyral (PVB). It is conventional in the art to refer to each glass sheet as a "ply". Often the adhesive layer itself is also referred to as a "ply", that is, a ply of PVB. The glass sheet configured to face the interior of a vehicle in which the laminated glazing is installed is usually referred to as the "inner ply" whilst the glass sheet configured to face the exterior of the vehicle in which the laminated glazing is installed is often referred to as the "outer ply". The two sheets of glass are often comprised of the same material such as soda-lime silicate glass.

Each of the glass sheets used in a laminated glazing, such as a vehicle windscreen may be shaped or bent in one or two mutually perpendicular directions such that the laminated glazing is curved. Many methods are known for bending sheets of initially flat glass to a desired curvature to form a vehicle glazing such as a windscreen.

For example, one known method is to bend a pair of initially flat glass sheets at the same time, with one sheet of glass on top of another and separated by a suitable "parting powder" such as calcium carbonate. In this way, the inner ply and outer glass ply sheets are heated until malleable, bent and hence shaped at the same time by for instance a gravity sag bending process.

An alternative method of bending glass sheets for a vehicle glazing such as a windscreen is to heat and bend the inner ply and the outer ply at different times, usually one after the other, thereby forming the inner ply and the outer ply individually. For example, one such method of bending flat glass sheets individually involves conveying heated flat glass sheets between a pair of complementary shaping members and press bending each glass sheet separately. The glass sheets may then be cooled, brought together and laminated using a suitable adhesive interlayer such as PVB.

For instance, in WO 2015/031594 there is disclosed a laminate structure having a first glass layer, a second glass layer, and at least one polymer interlayer positioned between the first and second glass layers. In some embodiments, the first glass layer may be comprised of a strengthened glass having first and second surfaces, the second surface being adjacent the interlayer and chemically polished, and the second glass layer may be comprised of a strengthened glass having third and fourth surfaces. The fourth surface is opposite the interlayer and chemically polished and the third surface is adjacent the interlayer and has a substantially transparent coating formed thereon. In another embodiment, the first glass layer is curved, and the second glass layer is substantially planar and cold formed onto the first glass layer to provide a difference in surface compressive stresses on the surfaces of the second glass layer. However, the optical properties for the laminate structure described in this document and prepared using standard lamination procedures are not optimal for lighter weight laminated glazings and the procedure itself is labour intensive.

Unfortunately, a problem with using laminated glazings is that such glazings are inherently heavier than a single monolithic glazing. Consequently, the automotive industry is constantly seeking ways to produce laminated glazings of reduced final weight with a view to improving vehicle efficiency and lowering fuel consumption.

One way of achieving such light-weight glazing units is to use glass sheets which are asymmetric. That is, the individual sheets of glass making up the windscreen differ in terms of thickness. For example, in WO 2012/073030 there is described a laminated glazing comprising a first ply of glass having a thickness in a range 1.9 to 2.4mm, a polymer interlayer, and a second thinner ply of glass having a thickness in the range 0.8 to 1.4mm. However, even the teachings of this case do not reduce the weight of the glazing sufficiently.

In WO2013/107706 there is described a vehicle glazing comprising a set of sheets of curved glass, assembled into one stack by means of thermoplastic spacers, at least part of said set comprising a photovoltaic device formed from one or more semiconductor layers and, on either side, from thin conductive layers forming electrodes, a roof wherein at least the part of the photovoltaic device comprising the semiconductor layer or layers is formed on a substantially flat sheet of glass which is associated with at least one previously curved thicker sheet of glass in the assembled stack.

DE 102013012648 describes a windscreen which has an inner pane and an outer pane that are glued together by a film. The thickness of the film is changed in accordance with the direction of a height dimension (Z) of the windshield. A variable wedge angle (alpha) is formed with respect to the film in the direction of the height dimension of the windshield.

US 2014/141206 relates to a laminated glass panel for an automobile, having a curved shape resulting from the assembly of a first glass sheet, which is curved before said assembly, with an intermediate thermoplastic sheet and a second glass sheet, the thickness of which does not exceed one third of that of the first sheet, the second glass sheet not being curved, or having a curvature that is substantially smaller than that of the first sheet before the assembly thereof with the latter and the intermediate thermoplastic sheet.

Whilst it is possible to bend glass sheets using for example, gravity bending processes and thereby produce asymmetric sheets separately for use in light-weight glazing units, to date it has not been thought possible to shape ultra-thin glass plies, (for example, of less than 0.8mm) for use in laminated glazings and hence prepare light-weight glazing units such as side lights to the required quality and safety standards.

In US 2017/021597, a laminated glazing is described comprising a first ply of glazing material and a second ply of glazing material joined by at least one ply of adhesive interlayer material. The first ply of glazing material comprises a sheet of glass having a first composition and the second ply of glazing material comprises a sheet of glass having a second composition different to the first composition. The laminated glazing has (i) a peripheral region extending around the periphery of the laminated glazing, the laminated glazing having a surface compression stress in the peripheral region and (ii) an edge compression, wherein the magnitude of edge compression is greater than the magnitude of the surface compression stress in the peripheral region. A method of making such a laminated is provided. A glass sheet suitable for being incorporated in such a laminated glazing is also disclosed.

In order to reduce the weight of a vehicle side window, it is known also to use thin sheets of glass that are laminated together by means of an adhesive interlayer such as polyvinyl butyral (PVB). Further, it is known to vary the compressive stress in at least one of the sheets of glass of the laminate to provide desirable mechanical characteristics.

US 2004/231778 describes a process for producing an arched pane arrangement for a motor vehicle, using a flexible die, a plastic film being pressed onto the arched glass pane in order to form a film combination and the film combination being subjected to heat treatment at a pressure which is below atmospheric pressure in order to laminate the plastic film onto the pane. The die is thin glass or a metal foil with a layer thickness of less than 1 mm each.

It is known also that laminated side windows may have a construction such that when the side window is fully closed, the sheet of glass facing the interior of the vehicle does not extend fully downwards to the winder mechanism. Instead the winder mechanism is only connected to a connector region that is part of the outer sheet of glass of the laminated glazing. Actuation of the winder mechanism still moves the inner sheet of glass at the same time as the outer sheet of glass because the outer sheet of glass is joined to the inner sheet of glass by the adhesive interlayer material (such as PVB). However, the winder mechanism is not in direct physical contact with the inner sheet of glass.

In US 4,985,099 and US 2015/0224855A1, there is described the use of a sheet of chemically strengthened glass as an inner facing sheet in a vehicle side window. The sheet of chemically strengthened glass may be coextensive with the outer pane of glass or may only cover the aperture portion of the vehicle when the side window is in a closed position as described above. However, the glazing is not light weight and the thickness of each glass sheet is not minimized.

Also, a problem arises when the inner facing sheet of glass only covers the aperture portion of the vehicle such that, in the event of breakage of the outer sheet of glass, the integrity of the adhesive interlayer material joining the inner glass sheet to the outer glass sheet may also be compromised such that the inner glass sheet may also become broken and/or become detached from the adhesive interlayer material with the potential to cause injury to anyone inside the vehicle.

Therefore, there exists the need for a process by which asymmetric and light weight laminated vehicle glazings may be produced with inner and outer glass plies prepared using different shaping processes or tooling, or in which the glass plies have been produced at different times, comprise different compositions, thicknesses or starting shape, and which are used to form automotive glazing, specifically a side window or side light, whilst still meeting commercial needs and industry safety standards. The present invention aims to at least partially overcome this problem.

According to a first aspect of the present invention there is a process for preparing a laminated glazing suitable for use in a vehicle comprising the steps of:
i) providing a first glass sheet with a first composition formed into a desired shape with a first thickness and with a first composition;
ii) providing a second substantially flat glass sheet with a second composition and a second thickness, and wherein the thickness of the first sheet is different to the thickness of the second glass sheet;
iii) providing an interlayer structure located between the first and second glass sheet; and
iv) providing a mould which is shaped substantially the same as the first glass sheet against the second glass sheet; and
v) laminating together the first and second glass sheets and the interlayer at a temperature and pressure sufficient to adhere the interlayer material to the glass sheets, such that after lamination, the shape of the second glass sheet is sufficiently aligned with the shape of the first glass sheet; and wherein the first composition of the first glass sheet is different to the second composition of the second glass sheet.

Further, it is most preferred that the second glass sheet is a substantially flat glass sheet prior to lamination. That is, the second glass sheet has preferably not been previously curved or shaped prior to lamination.

The interlayer may comprise a single layer or a series of layers. Preferably, the interlayer structure comprises: i) at least a first layer of adhesive interlayer material; ii) a second layer of interlayer material; and iii) a support sheet; and wherein the support sheet is located between the first and second layers of interlayer material.

Also in relation to the process of the present invention it is preferred that the first and second glass sheets and the interlayer are laminated together at a temperature in the range of 90 °C to 132 °C, and a pressure in the range 8 to 16 bar, to adhere the interlayer structure to the two glass sheets. More preferably, the lamination occurs at a temperature in the range of 100 °C to 110 °C.

Preferably the support sheet has a higher rigidity than the first and/or second layers of adhesive interlayer material; and/or the support sheet is preferably more dimensionally stable than the first; and/or second layers of adhesive interlayer material; and/or the support sheet is preferably stiffer than the first and/or second layers of adhesive interlayer material; and/or the support sheet preferably has a Young's modulus between 0.1 GPa and 100 GPa.

It is also preferred that the support sheet preferably comprises a sheet of polyester, in particular a sheet of polyethylene terephthalate (PET), or a sheet of glass or an ionoplast interlayer material. In addition, the support sheet may be monolithic or multi-layered.

Also in relation to the present invention the support sheet may comprise a thickness of between 50µm and 1000µm; and/or the support sheet may be thinner than the second sheet of glass.

In relation to the process of the present invention, the first layer of adhesive interlayer material may be coextensive with the first sheet of glass. Alternatively, the first layer of adhesive interlayer material may be coextensive with the support sheet.

Further, the second layer of adhesive interlayer material may be coextensive with the second sheet of glass; and/or the second layer of adhesive interlayer material may be coextensive with the support sheet.

It is also preferred in relation to the present invention that the first sheet of glass is preferably a sheet of thermally toughened glass or a sheet of thermally semi-toughened glass. The first sheet of glass also preferably has a thickness in the range 2.0mm to 5.0mm. More preferably, the first sheet of glass has a thickness in the range of 2.0mm to 4.00mm, even more preferably, the first sheet of glass has a thickness in the range of 2.2mm to 3.8mm.

Also, the surface compressive stress in at least a central region of the first major surface of the first sheet of glass sheet may preferably be in the range of 18MPa to 23MPa. Alternatively, the first sheet of glass may preferably comprise a thickness in the range of 1.5mm and 1.69mm and preferably comprise a surface compressive stress in at least a central region of the first major surface of the first sheet of glass in the range of 23.1MPa to 26MPa. Also, the first sheet of glass may preferably have a thickness in the range of 1.7mm and 1.99mm and a surface compressive stress in at least a central region of the first major surface of the first sheet of glass in the range of 26.1 MPa to 30MPa. Alternatively, the first sheet of glass may comprise a thickness in the range 2.0mm and 2.19mm and comprise a surface compressive stress in at least a central region of the first major surface of the first sheet of glass in the range of 30.1MPa to 35MPa. Further, the first sheet of glass may comprise a thickness in the range 2.2mm and 2.49mm and comprise a surface compressive stress in at least a central region of the first major surface of the first sheet of glass in the range of 35.1MPa to 45MPa. Further, the first sheet of glass may comprise a thickness in the range 2.5mm and 2.7mm and comprise a surface compressive stress in at least a central region of the first major surface of the first sheet of glass in the range of 45.1MPa to 65MPa. Also, the first sheet of glass may comprise a thickness in the range 2.71mm and 6mm and comprise a surface compressive stress in at least a central region of the first major surface of the first sheet of glass in the range of 65.1MPa to 150MPa, more preferably in the range of 65.1MPa to 100MPa.

Also in relation to the process of the present invention, the thickness of the second sheet of glass is preferably in the range of 0.3mm and 1.0mm. Further, it is preferred that the second sheet of glass has been chemically strengthened.

It may also be the case that the second sheet of glass may be chemically strengthened to have surface compressive stress greater than 400MPa, preferably between 400MPa and 900MPa, more preferably between 400MPa and 700MPa, even more preferably between 450MPa and 675MPa. Also, the second sheet of glass may be chemically strengthened to have a depth of layer (DOL) in the range 10µm and 60µm, or 25µm to 45µm, even more preferably 30µm to 40µm.

In relation to the process of the present invention, the first and/or second layer of adhesive interlayer material preferably comprises one or more of: polyvinyl butyral (PVB), acoustic modified PVB, a copolymer of ethylene such as ethylene vinyl acetate (EVA), polyurethane (PU), polycarbonate, poly vinyl chloride (PVC) or a copolymer of ethylene and methacrylic acid, and/or wherein the first and/or second layer of adhesive interlayer material has a thickness between 0.3mm and 2.3mm, preferably between 0.3mm and 1.6mm, more preferably between 0.3mm and 0.9mm.

Further, the first and second sheets of glass each have a periphery and the periphery of the second sheet of glass may be contiguous with the periphery of the first sheet of glass or the periphery of the second sheet of glass may be enclosed within the periphery of the first sheet of glass. Most preferably at least a portion of the periphery of the first sheet of glass is aligned with a portion of the periphery of the second sheet of glass.

Also in relation to the process of the present invention there is preferably provided the step of: vi) providing a foil layer between the second glass sheet and the mould shaped substantially the same as the first glass sheet, prior to laminating.

Preferably, the mould shaped substantially the same as the first glass sheet is comprised of glass, ceramic or metal, More preferably, the mould shaped substantially the same as the first glass sheet preferably comprises a third glass sheet.

Further in relation to the method of the present invention there is preferably provided the step of: vii) removing the third glass sheet and the foil layer from the laminated first and second glass sheets once lamination is complete.

According to a second aspect of the present invention there is provided a laminated glazing prepared according to the first aspect of the present invention. That is, each feature described above in relation to the first aspect of the present invention may preferably be applied in relation to the second aspect of the present invention. Preferably the laminated glazing according to the second aspect of the present invention is a side window, back window or windscreen.

Consequently, according to a third aspect of the present invention there is provided the use of a laminated glazing according to a first aspect of the present invention in vehicle such as a car. Each of the features described above in relation to the first aspect of the present invention may preferably also be applied in relation to the second aspect of the present invention.

In accordance with the first, second or third aspects of the present invention the laminated glazing may be any glass article used in a vehicle. However, it is preferred that the laminated glazing according to the first, second or third aspects of the present invention is a vehicle side window or sidelight.

Embodiments of the present invention will now be described by way of example only with reference to the following examples and accompanying drawings (not to scale), in which:
Figure 1 is a schematic plan view of a vehicle side window produced in accordance with the first aspect of the present invention;
Figure 2 is a schematic cross-sectional representation of the vehicle side window shown in Figure1 and therefore produced also in accordance with the first aspect of the present invention;
Figures 3 to 6 are schematic side views of a vehicle having a vehicle side window;
Figure 7 is schematic cross-sectional representation of another vehicle side window having the same plan view as shown in Figure1; and
Figure 8 is a schematic representation of the lamination process for a vehicle glazing according to the present invention.
Figure 9 is a schematic representation of the lamination process for a vehicle side window according to the present invention.

In the following description of the present invention, surface compressive stress measurements were made using a Strainoptics Laser GASP-CS (http://www.strainoptics.com/files/Laser%20GASP-CS%20Quick-Start%20 (English).pdf). Such equipment is available from Strainoptics, Inc., 108 W. Montgomery Avenue, North Wales, PA 19454 USA.

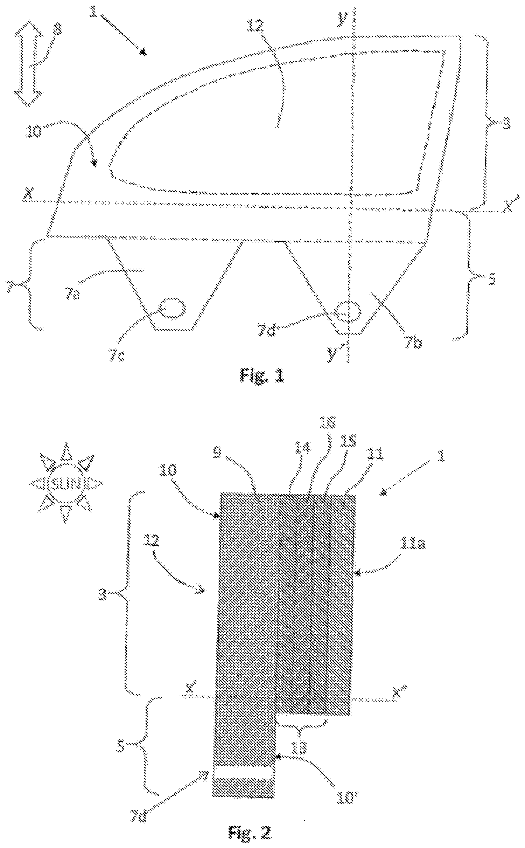

Figure 1 shows a plan view of a vehicle side window 1 produced in accordance with the first aspect of the present invention. In plan view, the vehicle side window 1 has an upper region 3, a lower region 5 and a connection region 7.

The upper region 3 is defined in relation to a line *x*-*x*', and the line *x*-*x*', is defined by the styling of the vehicle into which the vehicle side window is installed, as will be discussed in more detail below. In this example the connection region 7 comprises a first trapezoidal portion 7a and a second trapezoidal portion 7b. Each trapezoidal portion 7a, 7b has a respective hole 7c, 7d at the narrow end thereof. The holes 7c, 7d are used to connect a winder mechanism (not shown) to the vehicle side window 1 to move the vehicle side window vertically, that is, in the direction of arrow 8. The vehicle side window 1 has a major surface 10 configured for use as an outer surface. The major surface 10 has a central region 12, the central region being inboard of the periphery of the vehicle side window 1.

Figure 2 shows a schematic cross sectional view of the vehicle side window 1 shown in Figure1 taken through the line *y*-*y*'. The line *x*'-*x*" forms a horizontal plane with the line *x*-*x*'.

The vehicle side window 1 in Figure 2 comprises a first sheet of glass 9 joined to a second sheet of glass 11 by an interlayer structure 13 consisting of a first layer of polyvinyl butyral (PVB) 14, a second layer of PVB 15 and a support sheet 16. In this example the support sheet is a 250µm thick sheet of PET, although the thickness of the support sheet may be thicker or thinner. If the support sheet is more rigid, the thickness thereof may be less than a support sheet that is less rigid.

The first layer of PVB 14 has a thickness of 0.38mm and the second layer PVB 15 has a thickness of 0.38mm. Each of the first and second layers of PVB may have a different thickness, for example 0.76mm or 0.82mm or 0.86mm. The first and/or second layer of PVB may be acoustic modified PVB having a thickness of about 0.5mm.

The sheet of PET 16 is located between the first and second layers of PVB 14, 15. The sheet of PET 16 has a first major surface and a second opposing major surface. One major surface of the sheet of PET 16 is in direct contact with the first layer of PVB 14 and the other major surface of the sheet of PET 16 is in direct contact with the second layer of PVB 15.

It is possible that the first and/or second major surfaces of the sheet of PET 16 may have a coating thereon, for example a scratch resistant coating and/or a solar control coating and/or an infra-red reflecting coating, in which case the first and/or second major surface of the sheet of PET 16 is a coated surface and the first and/or second layer of PVB 14, 15 will be in direct contact with the respective coating and not with the PET (because the coating in directly on the PET).

The first sheet of glass 9 has a second major surface 10' opposite the first major surface 10 thereof. The first layer of PVB 14 is in direct contact with the second major surface 10'.

The second sheet of glass 11 has a first major surface (not labelled) and a second opposing major surface 11a. The second layer of PVB 15 is in direct contact with the first major surface second sheet of glass 11.

The second major surface 10' of the first sheet of glass 9 may have a coating thereon, in which case the second major surface 10' of the first sheet of glass would be a coated glass surface. In such an embodiment, the first layer of PVB 14 would be in contact with the coating on the second major surface 10' of the first sheet of glass 9.

Similarly, the first major surface of the second sheet of glass 11 may have a coating thereon, in which case the first major surface of the second sheet of glass is a coated glass surface. In such an embodiment, the second layer of PVB 15 would be in contact with the coating on the first major surface of the second sheet of glass 11. It is also possible that the outer facing surfaces 10, 11a of the laminated glazing may have a coating thereon.

Using conventional nomenclature, the major surface 10 is known as "surface 1" because it is the first surface of the glazing facing the "outside", that is, in normal use, the major surface 10 of the vehicle side window 1 is the surface a ray of sunlight strikes first.

The first sheet of glass 9 may be a sheet of clear float glass such as soda-lime-silicate glass and may also comprise iron oxide as a tinting agent to provide the laminated glazing with some form of solar control.

A typical soda-lime-silicate glass composition for use in the present invention is (by weight), SiO₂ 69 to 74 %; Al₂O₃ 0 to 3 %; Na₂O 10 to 16 %; K₂O 0 to 5 %; MgO 0 to 6 %; CaO 5 to 14 %; SOs 0 to 2 %; Fe₂O₃ 0.005 to 2 %. The glass composition may also contain other additives, for example, refining aids, which would normally be present in an amount of up to 2 %. The soda-lime-silicate glass composition may contain other colouring agents such as Co₃O₄, NiO and Se to impart to the glass a desired colour when viewed in transmitted light. The transmitted glass colour may be measured in terms of a recognised standard such as BS EN410.

In this example the first sheet of glass 9 has a thickness of 2.8mm and has been thermally semi-toughened using a conventional high pressure cooling air technique. The compressive stress in at least the central region 12 of the glass may be around 33MPa.

The second sheet of glass 11 has a thickness of 0.5mm but may have a thickness in the range of 0.3mm to 0.8mm, for example 0.4mm to 0.8mm. Preferably the second sheet of glass 11 may have a thickness of 0.5mm.

The second sheet of glass preferably has been chemically strengthened using a conventional molten salt ion exchange process to exchange sodium ions in the surface of the second sheet of glass with potassium ions from a suitable molten salt. The chemical strengthening process is controlled to provide the second sheet of glass with a depth of layer (DOL) of 35µm and a surface compressive stress greater than 400MPa, typically between 450MPa and 700MPa. The surface compressive stress may be as high as 900MPa. The DOL may be between 30µm and 40µm.

A suitable glass composition for the second sheet of glass 13 is an alkali aluminosilicate glass such as Gorilla^{™} glass available from Corning Incorporated.

A specific composition for the second sheet of glass 11 may be for example 68 mol% SiO₂, 2.5 mol% Al₂O₃, 11 mol% MgO, 3.7 mol% CaO, 14.2 mol% Na₂O, 0.6 mol% K₂O. For this composition MgO and CaO is 14.7 mol% and Na₂O and K₂O is 14.8 mol%. This is composition number 13 in table 2 on page 20 of WO 2014/148020A as published. The iron oxide (Fe₂O₃) content of the second sheet of glass may be low, being less than 0.1 percent by weight that is, about 0.012 percent by weight.

An alternative chemically toughened glass sheet composition for use as the second glass sheet according to the first aspect of the present invention may comprise for example: 66-72 mol. % SiO₂, 1-4 mol. % Al₂O₃, 8-15 mol. % MgO, 1-8 mol. % CaO, 12-16 mol.% Na₂O, preferably wherein the amount of MgO and CaO is between 12 and 17 mol. % and CaO/(MgO + CaO) is in the range 0.1 and 0.4. This composition is available from NSG as glanova^{™} glass.

Alternatively, the chemically toughened glass sheets may preferably comprise (by weight) 58% to 70% SiO₂, 5% to 15% Al₂O₃, 12% to 18% Na₂O, 0.1% to 5% K₂O, 4% to 10% MgO and 0% to 1% CaO with the provisos that: the sum of the Al₂O₃ and MgO exceeds 13%; that the sum of the amounts of Al₂O₃ plus MgO divided by the amount of K₂O exceeds 3; and that the sum of the Na₂O plus K₂O plus MgO exceeds 22%.

As shown in Figure 2, the hole 7d passes through the first sheet of glass 9 and extends between the first and second major surface 10, 10' thereof. The hole 7c also passes through the first sheet of glass 9. The holes 7c, 7d help define the position of the connection region 7

As Figure 2 shows, the interlayer structure 13 and the second sheet of glass 11 extend below the line *x'-x*"*,* and consequently below the line *x-x'* in Figure 1. The first and second layers of PVB 14, 15, the sheet of PET 16 and the second sheet of glass 11 are not coextensive with the first sheet of glass 9. This results in the connection region 7 not being covered by the first and second layers of PVB 14, 15, the sheet of PET 16 and the second sheet of glass 11 so that a conventional winder mechanism (not shown) may be attached to the connection region 7 that is, via holes 7c (not shown in Figure 2) and 7d.

The interlayer structure 13, prior to lamination, may be formed from three separate sheets that is, a sheet of PVB 14, a sheet of PET 16 and a sheet of PVB 15. Alternatively, the interlayer structure may be at least partly preformed prior to lamination, for example the first and/or second layer of PVB 14, 15 may be joined to the sheet of PET 16 prior to the lamination process to join the first sheet of glass 9 to the second sheet of glass 11 by means of the interlayer structure 13. For example, the first layer of PVB 14 may be joined to the sheet of PET 16 prior to lamination. Such a composite structure is commercially available from DuPont^{®} and is known as Spallshield^{®}. Typically with such a composite structure product, the surface of the PET not in contact with PVB is usually coated with an abrasion resistant hard coat.

Whilst conventional lamination processes may be used to join the first sheet of glass 9 to the second sheet of glass 11 by means of the interlayer structure 13, the present invention discloses an improved approach for laminating side windows for vehicles, as will be described further below.

Although the first and second sheets of glass 9, 11 are shown as flat (or planar), it is possible in relation to the present invention for the laminated glazing 1 to be curved in at least one direction. In such embodiments the first sheet of glass 9 may be suitably curved prior to lamination whilst the second sheet of glass 11 is flat prior to lamination. However, the nature and composition of the second sheet of glass 11, provides a sufficient level of strength and flexibility to enable the second sheet of glass 11 to be aligned to the shape of the first glass sheet during lamination when the process of the present invention is used, and a slave mould as described below is utilised. Consequently, following the process of the present invention the holding of the second sheet of glass 11 against the interlayer structure 13 enables the second glass sheet to conform to the shape of the curved first sheet of glass 9.

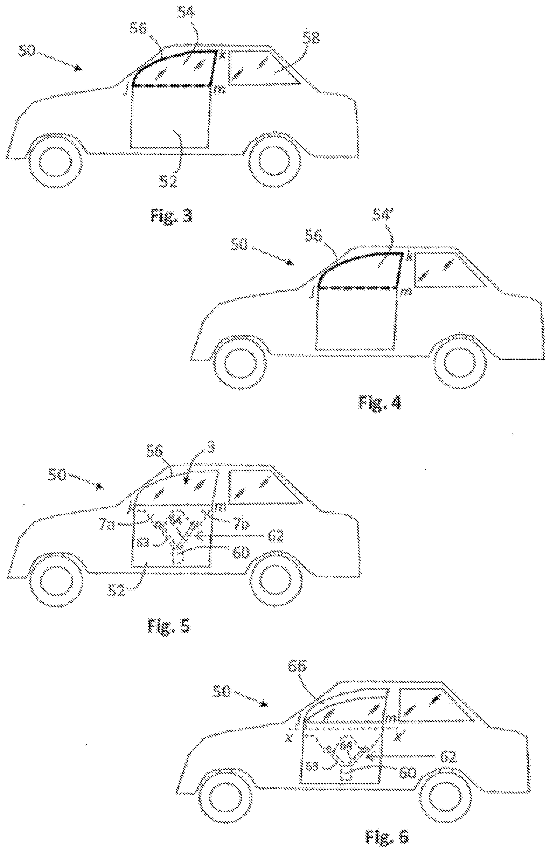

Figure 3 shows a schematic side view of a vehicle 50. The vehicle 50 has a side door 52 and an aperture 54 having a periphery 56 and into which a vehicle side window of the type shown in Figures 1 and 2 is vertically movable therein in a manner known in the art. The periphery 56 may be defined by part of the vehicle door that is a suitable frame, or a part of the vehicle body.

The periphery 56 has corners *j, k* and *m*. The line *j-m* defines the position of the line *x*-*x*' shown in Figure 1. In Figure 3 the aperture 54 is shown in a closed position with the vehicle side window closing the aperture 54. With reference to Figures 1 and 2, a portion of the major surface 10 of the first sheet of glass closes the aperture 54.

Also shown in Figure 3, the vehicle 50 also has a fixed side window 58. The fixed side window 58 may also be produced in accordance with the process of the present invention. However, as the side window 58 is fixed in a frame, there is no need for the side window 58 to have a connection region for connecting a winder mechanism to the side window 58.

Figure 4 shows the vehicle 50 with the aperture 54' in a second configuration with the vehicle side window wound fully down.

Following on from Figures 1 to 3, Figure 5 shows vehicle 50 having a side door 52 incorporating a vehicle side window 1 movable in aperture 54. In this Figure, the vehicle side window 1 below the line *x-x'* (that is, the line *j-m* defined by the aperture) is shown in phantom. Located in a lower portion of the door 52 is a winder mechanism 60. A suitable linkage 62 connects the winder mechanism 60 to the connection region of the vehicle side window 1. A first linkage member 63 is in mechanical communication with the first trapezoidal portion 7a and a second linkage member 64 is in mechanical communication with the second trapezoidal portion 7b. The holes 7c, 7d may be used to attach an end of the respective linkage members 63, 64 to the respective trapezoidal portion 7a, 7b. The aperture 54 is closed by the upper region 3 of the vehicle side window 1.

In Figure 6 the winder mechanism 60 has been suitable actuated to wind the vehicle side window partially down such that there is an opening 66 in the aperture 54, that is, the aperture is no longer fully closed. By actuation of the winder mechanism 60 the winder linkage 62 moves from the first position shown in Figure 5 to the second position shown in Figure 6. Each of the first and second linkages 63, 64 are suitably moved towards the winder mechanism 60 thereby lowering the vehicle side window in the aperture. Consequently, the line *x*-*x*' on the vehicle side window 1 moves below the line *j-m* defined by the aperture 54. The interior of the vehicle 50 is accessible via the opening 66.

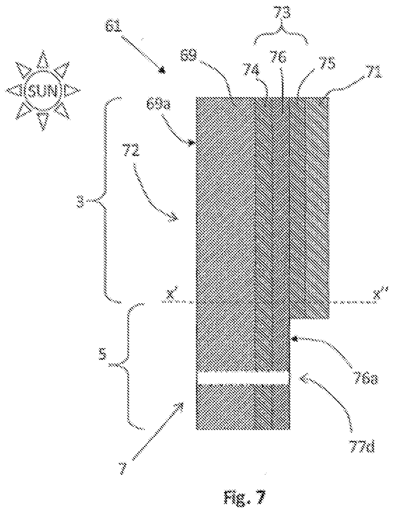

Figure 7 shows a schematic cross-sectional representation of another laminated glazing produced in accordance with the present invention.

The laminated glazing 61 is a vehicle side window and is similar to the vehicle side window 1 described with reference to Figures 1 and 2. As in Figure 2 the line *x*'-*x*" forms a horizontal plane with the line *x*-*x*'. The regions 3, 5 and 7 are defined in the same way as with reference to Figure 1 and the laminated glazing 61 has the same plan view as the laminated glazing shown in Figure 1.

The laminated glazing 61 has a first sheet of glass 69 joined to a second sheet of glass 71 by means of interlayer structure 73. The interlayer structure 73 consists of a first layer of PVB 74 having a thickness of 0.76mm, a second layer of PVB 75 having a thickness of 0.76mm and a sheet of PET 76 having a thickness of 400µm. The sheet of PET 76 is located between the first and second sheets of PVB 74, 75. The sheet of PET 76 is coextensive with the first layer of PVB 74 and may be a composite structure of the type discussed above, for example the layer of PVB 74 may be joined to the sheet of PET 76 prior to lamination. The exposed major surface 76a of the sheet of PET 76 may have an anti-abrasion hard coat thereon. Prior to being incorporated into the laminated glazing 61, such an anti-abrasion coating may extend over the entire exposed major surface of the sheet of PET 76. The second layer of PVB 75 is coextensive with the second sheet of glass 71. However, the second layer of PVB 75 and the second sheet of glass 71 are not coextensive with the first sheet of glass 69.

The first sheet of glass 69 may comprise a sheet of soda-lime-silicate glass having a composition such as clear float glass, typically with the addition of iron oxide as a tinting agent to provide the laminated glazing with some form of solar control. A typical and suitable soda-lime silicate glass composition (by weight) is described above in relation to Figure 2.

However, in this example the first sheet of glass 69 preferably has a thickness of 4.85 mm and has been thermally toughened using a conventional high pressure cooling air technique such that the compressive stress in at least the central region of the first sheet of glass 69 is around 90MPa.

The second sheet of glass 71 preferably has a thickness of 0.6mm but may have a thickness in the range of 0.3mm to 0.8mm, for example 0.4mm to 0.8mm. The second sheet of glass 71 most preferably has a thickness of 0.5mm or 0.7mm.

The second sheet of glass 71 may preferably have been chemically strengthened using a conventional molten salt ion exchange process to exchange sodium ions in the surface of the second sheet of glass with potassium ions from a suitable molten salt. The chemical strengthening process is controlled to provide the second sheet of glass with a depth of layer (DOL) of 35µm and a surface compressive stress greater than 400MPa, typically between 450MPa and 700MPa. The surface compressive stress may be as high as 900MPa. The DOL may be between 30µm and 40µm.

A suitable composition for the second sheet of glass 71 is 68 mol% SiO₂, 2.5 mol% Al₂O₃, 11 mol% MgO, 3.7 mol% CaO, 14.2 mol% Na₂O, 0.6 mol% K₂O. For this composition MgO + CaO is 14.7 mol% and Na₂O + K₂O is 14.8 mol%. This is composition number 13 in table 2 on page 20 of WO2014/148020A1 as published. The iron oxide (Fe₂O₃) content of the second ply may be low, being less than 0.1 percent by weight i.e. about 0.012 percent by weight. Alternative suitable compositions are described above in relation to the second sheet of glass 11, in Figure 2.

As shown in Figure 7, a hole 77d passes through the first sheet of glass 69, the first layer of PVB 74 and the sheet of PET 76. In addition, it can be seen that in Figure 7 part of the interlayer structure 73 extends below the line *x*'-*x*", and consequently below the line *x*-*x*' in Figure 1.

The first layer of PVB 74 is coextensive with both the sheet of PET 76 and the first sheet of glass 71 (other than at the hole 7d). As such, the first layer of PVB 74 and the sheet of PET 76 extend below the line *x*'-*x*" (and *x*'-*x*') to cover the lower region 5 and the connection region 7. The region around the hole 7d is also surrounded by PVB (from layer 74) and PET (from the sheet of PET 76).

In an alternative embodiment to that shown, the hole 7d is still surrounded by PVB and PET but either or both the first layer of PVB 74 and the sheet of PET 76 are not coextensive with the first sheet of glass 69.

In the event of breakage of the first sheet of glass 69, for example by an impact on "surface 1" of the laminated glazing 61 (that is, major surface 69a of the first sheet of glass 69), the sheet of PET 76 (and the layer of PVB 74) acts to support the second layer of PVB 75 so that the second sheet of glass 71 does not become detached from the laminated glazing 61. Even in the event of a breach of the sheet of PET 76, the supporting function thereof (in combination with the layer of PVB 74) may still be adequate to allow the second sheet of glass 71 to remain attached to the PET sheet 76 by means of the second layer of PVB 75.

Although in the previous Figures 2, 7 the vehicle side windows 1, 61 are shown as being flat (or planar) having a flat outer surface, the vehicle side window 1, 61 may be curved in one or more directions after lamination. The radius of curvature in one of the one or more directions may be between 1000mm and 8000mm. When the laminated glazing is curved in two directions, suitably each direction of curvature is orthogonal to the other. Suitably the radius of curvature in one or both directions of curvature is between 1000mm and 8000mm.

Consequently, according to the present invention it is possible to use a shaped first glass sheet and a second substantially flat sheet of glass and mould the shape of the second sheet of glass to the shape of the first sheet of glass during the lamination process without breaking the glass. The temperature during the lamination process is sufficient to cause to the adhesive layer (that is one or more sheets of PVB) to bond to the first and second sheets of glass.

The present invention finds particular application in the field of vehicle glazings, especially vehicle side windows that may be movable within an aperture in the vehicle or fixed in an aperture in the vehicle. The laminated glazings may be used also in the rear of a vehicle (that is, as part or all of a vehicle backlight) or in the roof of a vehicle.

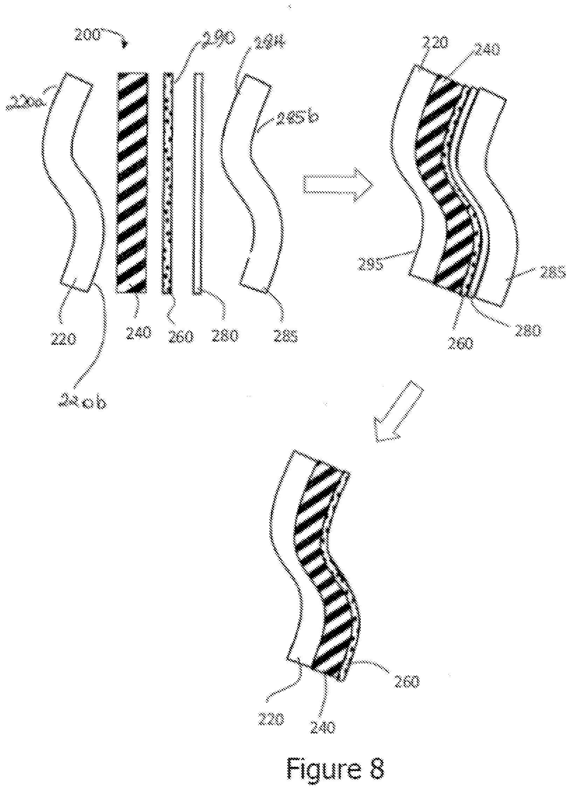

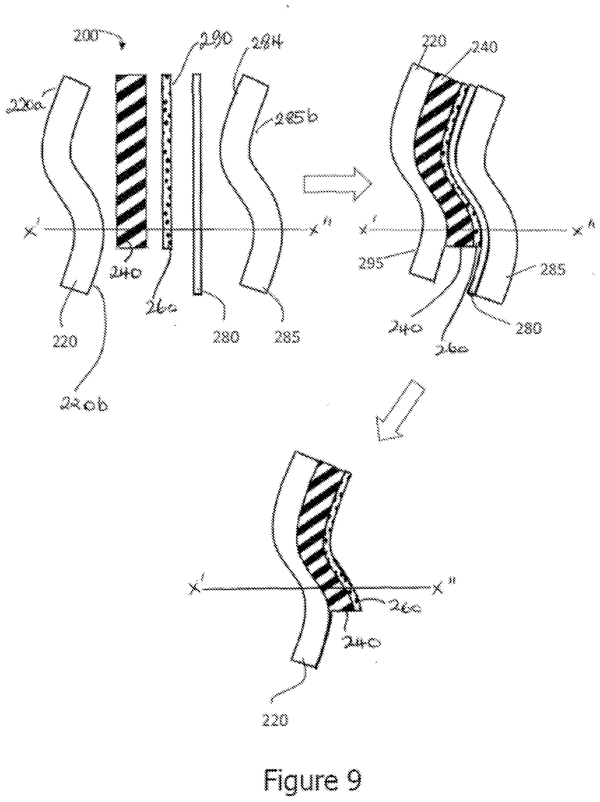

In relation to the present invention, the inventors have found that when preparing a laminated glazing such as a light weight vehicle side window with one curved sheet of glass and one substantially flat sheet of glass, in which one of the glass sheets is of a reduced thickness compared with the thickness of the second glass sheet, and in which the glass sheets have different compositions, the thinner glass sheet may be successfully moulded to the curvature and shape of the thicker and more rigid glass sheet using a modified glass processing technique as will be described further herein. The inventors have also found that harmonisation of the curved shape of the two glass sheets in a laminated glazing such as a side window may be achieved using a procedure described according to the process of the present invention. The process according to the present invention is described further below by way of example in relation to Figures 8 and 9, which are schematic representations of a first glass sheet, a second glass sheet and a slave mould prior to lamination.

### Method 1.

In Figure 8 there is illustrated a schematic representation 200 of a method of preparing a laminated glazing for a vehicle according to a first aspect of the present invention, whilst Figure 9 illustrates a schematic representation 200 of a method of preparing a laminated glazing for a vehicle side light according to a first aspect of the present invention. In relation to the Figures 8 and 9, like features are numbered accordingly. However, Figure 9 reflects an embodiment of the present invention in which below line x'-x" a shortened interlayer and shortened second glass sheet are visible as in Figure 2. For simplification, the interlayer in Figures 8 and 9 has been shown as a single layer, however, as will be described in further detail below and with reference to Figures 2 and 7, the interlayer may be a trilayer structure, with zero, one or more of the interlayers shortened below line x'-x", when for example a vehicle side window is being produced.

In the method, a first glass sheet 220, which is preferably flat, such as soda lime silicate glass, is formed into a desired shape, (such as, for example the shape required for a vehicle side window) by for example press-bending or gravity sag bending. This may be achieved by taking the flat soda lime silicate sheet of glass and cutting the sheet of glass into a shape with the required edge profile. The glass sheet is then heated to a malleable state and moulded generally to the required shape. Suitable compositions for the first glass sheet are described above. The glass sheet may also have been chemically toughened, as described previously in relation to the process of the present invention.

In press-bending, the process typically uses a pair of complementary shaping moulds; an upper shaping mould and a lower complementary shaping mould. Press-bending commonly involves the use of at least one heated shaping mould. The press-bending process is used to form the glass sheet generally into the shape of for example the required side window. Alternatively, the flat sheet of glass may be moulded into the required shape by sag or gravity bending. In a gravity sag-bending process, a sheet or ply of correctly sized flat glass is placed atop a bending ring and heated to a temperature at which the glass becomes malleable and sags freely under gravity. Sagging continues until the malleability of the glass is reduced by lowering the temperature. The glass sheet 220 which may also be thermally toughened is then cut into shape with the required edge profile.

Next, in the method of preparing a laminated glazing according to the present invention, a second flat sheet of for example soda lime silicate glass 260 which may also have been chemically toughened, is cut into shape with the required edge profile. Suitable compositions for the second glass sheet have also been described previously in relation to the process of the present invention for both soda lime silicate glass sheets and chemically toughened glass sheets.

The second sheet of glass is preferably however much thinner than the first sheet of glass. The second sheet of glass may be as much as 70% less, or even 80 % less than the thickness of the first sheet of glass. For example, the thickness of the first glass sheet may be in the range of: 2mm to 5mm; or in the range of 2.5mm to 4.0 mm. The thickness of the first glass sheet may also be in the range 2.6mm to 3.8mm. The thickness of the second glass sheet however may preferably be in the range of: 0.2 to 1.4mm; or in the range of 0.4mm to 1.0mm.

An adhesive interlayer 240 is then disposed between the first and second glass sheets in readiness for lamination. The adhesive interlayer may be a single layer, or a combination of layers as described previously according to the present invention in relation to Figures 2 and 7. For a single layer, the interlayer may range in thickness from 0.3mm to 1.8mm thick. Alternatively, the adhesive interlayer may have a thickness range of 0.5mm to 1.5mm. In certain embodiments each interlayer may have a thickness range of 0.05 to 1.0, or 0.05 to 0.76mm. Suitable adhesive interlayers which may be used in the method of the present invention include but are not limited to for example: polyvinylchloride (PVC), polyvinylbutyral (PVB), Ethylenevinyl acetate (EVA), also known as poly(ethylene-vinyl acetate) (PEVA), ethyl methyl acrylate (EMA), polyethylene terephthalate (PET), polycarbonate and polyurethane, and combinations thereof. Preferred interlayers used in the method of the present invention include however, polyvinyl butyral (PVB) and polyethylene terephthalate (PET) and combinations thereof as described above in relation to Figures 2 and 7. Typically, single adhesive interlayers of PVB material have a thickness which is preferably 0.76mm, 0.50mm or 0.38mm or combinations thereof. When the PVB is acoustic PCT, the thickness of the interlayer may be between 0.5 and 0.6mm, especially 0.55mm. When the single adhesive interlayer is PET, the interlayer may be coated or uncoated. Uncoated layers of PET preferably used in relation to the present invention comprise a thickness of 0.05mm. As illustrated in Figure 3 one or more of the adhesive layers may extend the full length of the first glass sheet, or alternatively, as illustrated in Figures 2 and 8, the adhesive interlayers and the second glass sheet may not extend the full length of the first glass sheet and may finish below line x-x', that is only to some extent beyond the upper region.

Next, a thin layer of foil 280 is applied in between the outer surface (S4) 290 of the second glass sheet (opposite the side of the second glass sheet which is not in contact with any adhesive interlayer) and a shaped mould 285.

The thin foil layer 280 is preferably a non-stick film, which is placed between the second glass sheet 260 and the mould 285 to prevent scratching. Suitable thin foils may include for example but are not limited to: polyester films available from Hostaphan Films or Mitsubishi Polyester Film GmbH under the brand names of Hostaphan^{®} and Diafoil^{®}.

The shaped mould 285 is preferably sized and shaped to match the profile of the first glass ply 220. The mould may be comprised of a suitable material such as for example a plastic, glass or ceramic material.

More preferably however, the mould is a glass sheet prepared by the same batch process used to prepare the first glass sheet 220 and thereby formed to be substantially the same shape as the first glass sheet. This mould is referred to herein a slave mould or slave glass.

As illustrated in Figures 8 and 9, prior to lamination, the first and second glass sheets and interlayer in combination with the slave mould and foil, undergo a 'pre-nip' process of the first and second glass sheets in which the first and second glass sheets, interlayer, foil and slave mould (as illustrated in Figures 8 and 9), are placed in a vacuum bag or vacuum ring, under vacuum at low temperature to draw the glass sheets together and remove trapped air.

That is, the first glass sheet 220 is first positioned and then the adhesive interlayer 240 is placed on face 220b of the first (pre-moulded) glass sheet 220, followed by the second glass sheet 260 being placed on the adhesive interlayer 240. The thin foil layer 280 is then placed next to the second pre-moulded glass sheet 260 and the slave mould of glass sheet 285 finally applied against the free side of the thin foil layer 280.

Consequently, the face 220a of the first glass sheet 220 and the face 285b of the slave mould or glass 285 form the two outer faces of a 'pre-nip' structure.

The air trapped between the glass sheets 220, 260 and adhesive interlayer 240 may be removed using for example a vacuum extraction technique or a nip roller process in order to expel air from between the glass sheets and adhesive interlayer with the slave glass also in place. The temperature of the pre-nip process is typically in the range of 90 to 110 °C.

Lamination of the glass sheets and adhesive interlayer is then completed using an autoclave which joins the first and second glass sheets 220, 260 and adhesive interlayer together into the required shape of the desired laminated glazing, with the shape of the second glass sheet being determined by the slave glass.

The temperature range used for the lamination in accordance with the method of the present invention is typically in the range 90 °C to 132 °C, or even 100 °C to 110 °C, for a period of 30 to 60 minutes. The choice of suitable temperature and pressure parameters enables the interlayer such as polyvinylbutyral (PVB) to form a suitable adhesive bond between the glass sheets. That is, the temperature and pressure parameters are preferably selected in such a way that flow within the laminate structure is minimal, thus forcing the thinner sheet or ply of glass to follow the shape of the thicker sheet or ply of glass and also the shape of the slave glass. In addition, it is preferred that if a vacuum ring or vacuum bag is employed in the 'pre-nip' process to hold the slave glass in place, then this may be used also during the autoclave process. If however, a vacuum ring or vacuum bag is employed, then preferably the temperature of the 'pre-nip' process is 90 to 100 °C, more preferably 92 °C to 98 °C and most preferably 95 °C. It is preferred that when a vehicle side light is being produced that a vacuum ring or vacuum bag is employed, and that the temperature of the 'pre-nip' process is preferably 95 °C.

Whilst an autoclave is preferably employed in the lamination process according to the present invention, it will be appreciated by one skilled in the art that where appropriate, it is also possible to utilize an oven equipped with vacuum ports in place of the autoclave to draw a vacuum from the vacuum ring or vacuum bag using suitable parameters as outlined above for the autoclave process.

Once the lamination process is complete, the laminated glazing structure such as a side window may be removed from the autoclave. The slave mould or glass 285 and the thin film 280 may then be removed from the laminated first and second glass sheets to obtain a laminated glazing 400 which once washed, is ready for use.

Use of the thin foil layer 280 allows easy separation of the inner glass layer 260 from the slave glass mould 285, and also protects the surface 290 of the inner glass layer and the inner surface 284 of the slave glass mould 285 from scratches. Once the slave glass mould has been separated from the laminated glass plies, it is possible to re-use the slave glass mould in a second iteration of the method of the present invention. The slave glass or mould may be used as a slave mould again or alternatively, the slave glass mould may be used as the first glass sheet 220. In this way, the method of the present invention offers advantages such as: it avoids the generation of excess waste glass as the slave glass mould may be reused; and in addition, the laminated glazing prepared by the method has improved optical properties.

The inventors have found that by using the method of the present invention described above it is possible to achieve a laminated glazing in which the curvature of the inner surface 290 (S4) of the second sheet 260 follows the curvature of the outer surface 220a of the first sheet 220.

That is, by using the method of the present invention, the inventors have found that it is possible to adapt the second thinner glass sheet (or inner glass) to adopt the shape of the first thicker glass sheet (or outer glass).

The inventors have also found that a preferred slave glass or mould 285 for use in the method of the present invention is another shaped first glass sheet which follows the same profile as the first glass sheet, and which may be formed in for example the same press-bending batch process as the first glass sheet.

The laminated glazing prepared in the embodiments of the present invention described above, preferably comprise sheets of soda-lime silicate glass having a composition such as clear float glass for the glass sheets. The glass sheets may for example also comprise iron oxide as a tinting agent to provide the laminated glazing with a measure of solar control.

A typical soda-lime silicate glass composition may comprise by weight for example: SiO₂ 69-74%; Al₂O₃; Na₂O 10 - 16%; K₂O 0-5%; MgO 0-6%; CaO 5-14%; SOs 0-2%; and Fe₂O₃ 0.005-2%.

The glass sheets may also contain other additives, for example refining aids, which would normally be present in an amount up to 2%. The soda-lime silicate glass composition may also contain other colouring agents such as CO₃O₄, NiO and Se to impart to the glass composition a desired colour when viewed in transmitted light.

In addition, the first glass sheets used in the method of the present invention may be preferably thermally toughened whilst the second glass sheet may be preferably chemically toughened before lamination. Chemical toughening involves treating the glass sheets with for example a potassium salt solution such as potassium nitrate in which the glass sheets are submersed at a temperature in the range 300 °C to 460 °C; more preferably at a temperature in the range 400 °C to 460 °C; most preferably at a temperature in the range 420 to 460 °C, such as around 450°C. Immersion of the glass in the potassium salt causes sodium ions in the glass surface to be replaced by potassium ions from the solution to impart additional impact resistance to the glass sheets when laminated. It is particularly preferred that the second thinner glass sheet 260 (or inner glass) is chemically toughened. In this way, the inventors have found that it is possible to prepare laminated glazings of reduced weight which are able to meet required safety standards whilst still meet structural and performance requirements.

Also in accordance with the method of the present invention, the outer surface S1 may preferably have a surface residual compression stress ranging from 10MPa to 20MPa, in for example a 300mm band extending around the periphery of the windscreen.

That is, the surface compression stress for the convex surface S1 of for example the first glass sheet 120, 220 of the laminated glazing may have an edge region having a residual edge stress with a net tension below 11MPa and an edge compression above 25MPa.

### Summary of method.

A summary of the method suitable for preparing a laminated glazing such as a side window for a vehicle in accordance with the present invention is as follows.

Initially a first sheet of glass, (for example soda-lime silicate glass) may be provided. The soda-lime-silicate glass may be clear or tinted. By clear float glass, is meant a glass sheet having a composition as defined in BS EN 572-1 and BS EN 572-2 (2004).

The first glass sheet may be cut and shaped generally to the desired shape using conventional techniques such as for example press-bending. The glass sheet of clear float glass may have a thickness for example in the range of 2.0 to 5mm. The edges of the glass sheet (also known as an outer blank) may be smoothed or 'edge-worked', following which the glass sheet may be washed.

After washing, one or both major surfaces of the glass sheet may be printed as required for the final product. For example, if the final product is a vehicle windscreen, a layer of ink, which may be optically opaque and/or electrically conductive, may be printed around the periphery of the glass sheet to form an obscuration band, as is conventional in the art.

The first glass sheet may be heated to glass softening temperature in a suitable furnace. The heat-softened glass may then be press-bent between a pair of complementary shaping members to impart a desired curvature to the outer sheet. Press bending allows precise control of the shape of the glass sheet. Examples of press-bending stations and operations are described in WO2005/033026A1 and EP0677486A2. Once bent, the cut sheet of for example clear float glass may proceed as the first sheet of the laminated glazing.

The glass sheet may also be thermally toughened. In addition, to control the stresses in the first glass sheet, the upper and/or lower press bending shaping members may be heated to control the residual edge stress and/or the edge compression of the outer sheet. By selecting the required temperature of the upper and/or lower press bending shaping members it is possible to produce an outer sheet having an edge region having a residual edge stress with for example a net tension below 11 MPa and an edge compression above 25MPa.

The residual surface stress may also be controlled by directing cooling air around the periphery of the bent glass sheet shortly after completion of the press-bending operation and before cooling the bent sheet to room temperature.

After possible cooling air has been directed onto the edges of the glass sheet for a suitable length of time to produce the required residual stress in the cooled bent glass sheet, the bent glass sheet is preferably controllably cooled to room temperature in a suitable annealing furnace.

Bending a series of glass sheets may form part of a batch process, in which a number of the first glass sheets are bent one after another. In this way, one of the glass sheets from the batch may be used as the first glass sheet in a laminated glazing and another of the glass sheets from the same batch may be used as a slave glass mould during the autoclave procedure as described below.

Next a second glass sheet is provided. The second glass sheet may be clear or tinted or the sheet may be modified soda-lime silicate glass, or the second glass sheet may be chemically strengthened, all as described previously above. Most preferably however, for side window laminated glazing, the second glass sheet is chemically strengthened.

The second sheet of soda-lime silicate glass or preferably chemically strengthened glass, may preferably have a thickness in the region of for example 0.7mm or less, and is cut to have the same periphery as the unbent first glass sheet (or outer blank). For a vehicle side window however, the second glass sheet is preferably cut to be shorter than the periphery of the first glass sheet, as indicated in Figures 2 and 7, that is, the second glass sheet extends only to a limited extent into the lower region (5) of the side window. Before being bent, the cut second sheet of glass may be referred to also as the inner blank.

The second sheet of soda-lime silicate glass or preferably chemically strengthened glass, may for example have a thickness of between 0.2mm and 1.4mm. Alternatively, the second sheet of soda-lime silicate glass or preferably chemically strengthened glass may for example have a thickness of between 0.4mm and 1mm. The second glass sheet is preferably chemically strengthened glass and is also suitably edge worked and washed prior to lamination. The use of chemically strengthened glass allows thinner second glass sheets to be used. That is, the chemically strengthened glass sheet may preferably be less than 1.0mm, more preferably less than 0.8mm and even less than 0.6mm, such as 0.5mm. A preferred side window therefore comprises a thickness for the first glass sheet in the range 1.0 and 5mm, more preferably in the range 1.5 and 4mm, and most preferably in the range 2.0 and 3mm, such as 2.85mm, whilst the second glass sheet preferably as a thickness in the range 0.2 to 1.4mm, more preferably 0.4 to 1.0mm, and preferably in the range 0.5 to 0.7mm, such as 0.55mm.

Alternatively, side windows may comprise a thickness for the first glass sheet in the range 0.2 and 2mm, more preferably in the range 0.4 and 1.5mm, and most preferably in the range 0.7 and 1.5mm, such as 1.4mm, whilst the second glass sheet preferably as a thickness in the range 0.2 to 1.4mm, more preferably 0.4 to 1.0mm, and preferably in the range 0.5 to 0.7mm, such as 0.55mm.

The second glass sheet of is preferably chemically strengthened using for example an ion exchange process, wherein typically, sodium ions in the second glass sheet are chemically exchanged for potassium ions.

The glass sheets are then washed and a sheet of interlayer material such as for example, polyvinyl butyral, having a thickness of between 0.3mm and 1.5mm may be positioned between the first glass sheet and the second glass sheet. The interlayer material may preferably be a 0.76mm thick sheet of polyvinyl butyral (PVB), or sheet of polyethylene terephthalate (PET) or combination thereof, although other suitable adhesive interlayer material may be used.

It is especially preferred that when side windows are prepared, that the interlayer is as described in relation to Figures 2 and 7, with an interlayer which comprises three layers in the form of a layer of PET sandwiched between two layers of PVB. The thickness of the PVB layer closest to the first glass sheet is preferably PVB of thickness 0.38 mm, the PET layer is preferably of thickness 50µm, and is uncoated, whilst the second layer of PVB, is preferably acoustic PVB, of thickness 0.55mm. The interlayers may extend the length of the first glass sheet or may be cut to the length of the second glass sheet. Alternatively, as indicated in Figure 7, some of the interlayer materials such as the PVB layer closest to the glass sheet and the PET interlayer may extend the length of the first glass sheet and the second PVB may be cut to the length of the second glass sheet.

In addition to positioning a suitable interlayer between the first and second glass sheets, a thin foil layer may also be placed on the opposite side of the second glass layer to the interlayer. In addition, a mould, which may be in the form of another preformed first glass sheet (or outer blank) may be placed on the opposing side of the thin foil layer to the second glass sheet.

The first and second glass sheets are then assembled, with the interlayer located between the sheets and with (or without) the additional foil layer slave mould (in the form of an additional bent first glass sheet) aligned with the first and second glass sheets. The layers are then pre-nipped to remove air from between the glass sheets. The components from the pre-nip are then autoclaved using suitable conditions as defined above in relation to the method of the present invention, to join the first glass sheet to the second glass sheet via the interlayer.

The foil layer and slave mould are then removed, and the slave mould may be reused either as a bent first glass sheet for lamination or as a slave mould again.

The laminated glazing so produced may then be washed and inspected ready for shipping to a customer. In this way, a laminated glazing according to the present invention is produced.

A comparison of the yield results produced by the process of the present invention using a `slave' mould compared to laminated glazings prepared by a simple lamination process which did not use the `slave' mould or glass, revealed, that the slave lamination process produced a 100% yield, with no rejects as identified in Table 1 below.

**Table 1**

| Part | **No 'slave' mould used in lamination process** | | **'Slave' mould used in lamination process** | |
|---|---|---|---|---|
| | Number of laminated units produced | Yield | Number of laminated units produced | Yield |
| Model 1 | 13 | 15% | 5 | 100% |
| Model 2 | 43 | 74% | 5 | 100% |
| Model 3 | 16 | 88% | 5 | 100% |

In Table 1, models 1, 2 and 3 are all side windows for vehicles.

The optics for side windows prepared by the method according to the present invention using a `slave' mould and side windows prepared using a lamination process which did not use a slave mould were compared using Shadowgraph transmission optics. Shadowgraph transmission optics uses a bright light to illuminate the laminated glazing which in turn produces a shadow image on a white board behind the glass. This arrangement highlights any optical distortion in the laminated glass. It was found that the laminated glazings produced using the `slave' mould also produced superior optical results and less distortion compared to laminated glazings produced without the use of a slave mould.

The present invention was therefore found to be particular suitable for the production of vehicle windows, especially side windows.

Therefore, it can be seen that in accordance with the method of the present invention it is possible to produce lightweight side windows with the required strength and appearance of modern motor vehicles.

## Claims

1. A process for preparing a laminated glazing suitable for use in a vehicle comprising the steps of:
i) providing a first glass sheet with a first composition formed into a desired shape with a first thickness and with a first composition;
ii) providing a second substantially flat glass sheet with a second composition and a second thickness, and wherein the thickness of the first sheet is different to the thickness of the second glass sheet;
iii) providing an interlayer structure located between the first and second glass sheet; and
iv) providing a mould which is shaped substantially the same as the first glass sheet against the second glass sheet; and
v) laminating together the first and second glass sheets and the interlayer at a temperature and pressure sufficient to adhere the interlayer material to the glass sheets, such that after lamination, the shape of the second glass sheet is sufficiently aligned with the shape of the first glass sheet; and
wherein the first composition of the first glass sheet is different to the second composition of the second glass sheet.

2. A process according to claim 1 wherein the interlayer structure comprises:
i) at least a first layer of adhesive interlayer material;
ii) a second layer of interlayer material; and
iii) a support sheet; and wherein
the support sheet is located between the first and second layers of interlayer material.

3. A process according to claim 1 or 2 wherein the first and second glass sheets and the interlayer are laminated together at a temperature in the range of 90 °C to 132 °C, and a pressure in the range 8 to 16 bar, to adhere the interlayer structure to the two glass sheets.

4. A process according to any preceding claim wherein in step v) lamination occurs at a temperature in the range of 90 °C to 110 °C, most preferably at 95°C .

5. A process according to any of claims 2 to 4, wherein the support sheet has a higher rigidity than the first; and/or second layers of adhesive interlayer material; and/or wherein the support sheet is more dimensionally stable than the first; and/or second layers of adhesive interlayer material; and/or wherein support sheet is stiffer than the first; and/or second layers of adhesive interlayer material; and/or wherein the support sheet comprises: a polyester, in particular polyethylene terephthalate (PET), or a sheet of glass or an ionoplast interlayer material; and/or wherein the support sheet is monolithic or multi-layered; and/or wherein the support sheet has a thickness between 50µm and 1000µm; and/or wherein the support sheet is thinner than the second sheet of glass.

6. A process according to any of claims 2 to 5, wherein the first layer of adhesive interlayer material is coextensive with the first sheet of glass; and/or, wherein the first layer of adhesive interlayer material is coextensive with the support sheet; and/or, wherein the second layer of adhesive interlayer material is coextensive with the second sheet of glass; and/or wherein the second layer of adhesive interlayer material is coextensive with the support sheet.

7. A process according to any of the preceding claims, wherein the first sheet of glass is a sheet of thermally toughened glass or a sheet of thermally semi-toughened glass; and/or, wherein the first sheet of glass comprises a thickness in the range of 2.0mm to 5.0mm, or the first glass sheet comprises a thickness in the range of 2.0 to 4.0mm, or the first glass sheet comprises a thickness in the range of 1.0 to 4.0mm.

8. A process according to any of claims 1 to 7, wherein first sheet of glass has a thickness in the range 1.3mm and 1.49mm and a surface compressive stress in at least a central region of the first major surface of the first sheet of glass sheet in the range of 18MPa to 23MPa, or wherein the first sheet of glass has a thickness in the range 1.5mm and 1.69mm and a surface compressive stress in at least a central region of the first major surface of the first sheet of glass in the range of 23.1MPa to 26MPa, or wherein the first sheet of glass has a thickness between 1.7mm and 1.99mm and a surface compressive stress in at least a central region of the first major surface of the first sheet of glass in the range of 26.1MPa to 30MPa, or wherein the first sheet of glass has a thickness between 2.0mm and 2.19mm and a surface compressive stress in at least a central region of the first major surface of the first sheet of glass in the range of 30.1MPa to 35MPa, or wherein the first sheet of glass has a thickness between 2.2mm and 2.49mm and a surface compressive stress in at least a central region of the first major surface of the first sheet of glass in the range of 35.1MPa to 45MPa, or wherein the first sheet of glass has a thickness between 2.5mm and 2.7mm and a surface compressive stress in at least a central region of the first major surface of the first sheet of glass in the range of 45.1MPa to 65MPa, or wherein the first sheet of glass has a thickness between 2.71mm and 6mm and a surface compressive stress in at least a central region of the first major surface of the first sheet of glass in the range of 65.1MPa to 150MPa, more preferably in the range of 65.1MPa to 100MPa, whereby the compressive stress is determined by using a Strainoptics laser GASP^{™} instrument.

9. A process according to any of the preceding claims, wherein the thickness of the second sheet of glass is between 0.3mm and 1.0mm; and/or wherein the second sheet of glass has been chemically strengthened; and/or, wherein the second sheet of glass is chemically strengthened to have surface compressive stress greater than 400MPa, preferably between 400MPa and 900MPa, more preferably between 400MPa and 700MPa, even more preferably between 450MPa and 675MPa and/or wherein the second sheet of glass is chemically strengthened to have a depth of layer (DOL) between 10µm and 60µm, more preferably between 25µm and 45µm, even more preferably between 30µm and 40µm.

10. A process according to any of claims 2 to 9, wherein the first and/or second layer of adhesive interlayer material comprises polyvinyl butyral (PVB), acoustic modified PVB, a copolymer of ethylene such as ethylene vinyl acetate (EVA), polyurethane (PU), polycarbonate, poly vinyl chloride (PVC) or a copolymer of ethylene and methacrylic acid, and/or wherein the first and/or second layer of adhesive interlayer material has a thickness between 0.3mm and 2.3mm, preferably between 0.3mm and 1.6mm, more preferably between 0.3mm and 0.9mm and/or,
wherein the first and second sheets of glass each have a periphery and the periphery of the second sheet of glass is contiguous with the periphery of the first sheet of glass or the periphery of the second sheet of glass is enclosed within the periphery of the first sheet of glass, preferably wherein a portion of the periphery of the first sheet of glass is aligned with a portion of the periphery of the second sheet of glass.

11. A process according to any preceding claims further comprising the step of:
vi) providing a foil layer between the second glass sheet and the mould shaped substantially the same as the first glass sheet, prior to laminating.

12. A process according to any preceding claim wherein the mould shaped substantially the same as the first glass sheet is comprised of glass, ceramic or metal; and/or wherein the mould shaped substantially the same as the first glass sheet comprises a third glass sheet.

13. A process according to any preceding claim further comprising the step of:
vii) removing the third glass sheet and the foil layer from the laminated first and second glass sheets.

14. A laminated glazing suitable for use in a vehicle prepared by the process according to any of claims 1 to 13 wherein the laminated glazing is a side window, back window or roof light.

15. Use of a laminated glazing prepared in accordance with the process of any of claims 1 to 13 in a vehicle.

## Patentansprüche

1. Verfahren zum Herstellen einer zur Verwendung in einem Fahrzeug geeigneten Verbundverglasung mit den Schritten:
i) Bereitstellen einer in eine gewünschte Form gebrachten ersten Glasscheibe mit einer ersten Zusammensetzung und einer ersten Dicke;
ii) Bereitstellen einer im Wesentlichen flachen zweiten Glasscheibe mit einer zweiten Zusammensetzung und einer zweiten Dicke, wobei die Dicke der ersten Scheibe von der Dicke der zweiten Glasscheibe abweicht;
iii) Bereitstellen einer zwischen der ersten und der zweiten Glasscheibe angeordneten Zwischenschichtstruktur; und
iv) Bereitstellen eines Formwerkzeugs, das im Wesentlichen genauso geformt ist wie die erste Glasscheibe, gegen die zweite Glasscheibe; und
v) Verbinden der ersten und zweiten Glasscheibe und der Zwischenschicht bei einer Temperatur und einem Druck, die ausreichen, um das Zwischenschichtmaterial an den Glasscheiben zum Haften zu bringen, so dass nach dem Verbinden die Form der zweiten Glasscheibe ausreichend an die Form der ersten Glasscheibe angepasst ist; und
wobei die erste Zusammensetzung der ersten Glasscheibe sich von der zweiten Zusammensetzung der zweiten Glasscheibe unterscheidet.

2. Verfahren nach Anspruch 1, bei dem die
Zwischenschichtstruktur umfasst:
i) mindestens eine erste Schicht aus einem klebenden Zwischenschichtmaterial;
ii) eine zweite Schicht aus Zwischenschichtmaterial; und
iii) eine Stützschicht; und wobei
die Stützschicht zwischen der ersten und der zweiten Schicht des Zwischenschichtmaterials angeordnet ist.

3. Verfahren nach Anspruch 1 oder 2, bei dem die erste und die zweite Glasscheibe und die Zwischenschicht bei einer Temperatur im Bereich von 90 °C bis 132 °C und einem Druck im Bereich von 8 bis 16 bar verbunden werden, um die Zwischenschichtstruktur an den beiden Glasscheiben zum Haften zu bringen.

4. Verfahren nach einem der vorhergehenden Ansprüche, bei dem in Schritt v) das Verbinden bei einer Temperatur im Bereich von 90 °C bis 110 °C, vorzugsweise bei 95 °C, erfolgt.

5. Verfahren nach einem der Ansprüche 2 bis 4, bei dem die Stützschicht eine höhere Steifigkeit als die erste und/oder zweite Schicht des klebenden Zwischenschichtmaterials aufweist; und/oder bei dem die Stützschicht abmessungsstabiler ist als die erste und/oder zweite Schicht des klebenden Zwischenschichtmaterials; und/oder bei dem die Stützschicht steifer ist als die erste und/oder zweite Schicht des klebenden Zwischenschichtmaterials; und/oder
bei dem die Stützschicht umfasst: ein Polyester, insbesondere Polyethylenterephthalat (PET), oder eine Glasscheibe oder ein Ionoplast-Zwischenschichtmaterial; und/oder bei dem die Stützschicht monolithisch oder mehrschichtig ist; und/oder bei dem die Stützschicht eine Dicke zwischen 50 µm und 1000 µm aufweist; und/oder bei dem die Stützschicht dünner ist als die zweite Glasscheibe.

6. Verfahren nach einem der Ansprüche 2 bis 5, bei dem die erste Schicht des klebenden Zwischenschichtmaterials die gleiche Ausdehnung wie die erste Glasscheibe hat; und/oder bei dem die erste Schicht des klebenden Zwischenschichtmaterials die gleiche Ausdehnung wie die Stützschicht hat; und/oder bei dem die zweite Schicht des klebenden Zwischenschichtmaterials mit der zweiten Glasscheibe deckungsgleich ist; und/oder bei dem die zweite Schicht des klebenden Zwischenschichtmaterials mit der Stützschicht deckungsgleich ist.

7. Verfahren nach einem der vorstehenden Ansprüche, bei dem die erste Glasscheibe eine Scheibe aus thermisch vorgespanntem Glas oder eine Scheibe aus thermisch teilvorgespanntem Glas ist; und/oder bei dem die erste Glasscheibe eine Dicke im Bereich von 2 ,0 mm bis 5,0 mm aufweist oder die erste Glasscheibe eine Dicke im Bereich von 2,0 bis 4,0 mm aufweist oder die erste Glasscheibe eine Dicke im Bereich von 1,0 bis 4,0 mm aufweist.

8. Verfahren nach einem der Ansprüche 1 bis 7, bei dem die erste Glasscheibe eine Dicke im Bereich von 1,3 mm und 1,49 mm und eine Oberflächendruckspannung zumindest in einem zentralen Bereich der ersten Hauptfläche der ersten Glasscheibe im Bereich von 18 MPa bis 23 MPa aufweist, oder bei dem die erste Glasscheibe eine Dicke im Bereich von 1,5 mm und 1,69 mm und eine Oberflächendruckspannung zumindest in einem zentralen Bereich der ersten Hauptfläche der ersten Glasscheibe im Bereich von 23,1 MPa bis 26 MPa aufweist, oder bei dem die erste Glasscheibe eine Dicke zwischen 1,7 mm und 1,99 mm und eine Oberflächendruckspannung zumindest in einem zentralen Bereich der ersten Hauptfläche der ersten Glasscheibe im Bereich von 26,1 MPa bis 30 MPa aufweist, oder bei dem die erste Glasscheibe eine Dicke zwischen 2,0 mm und 2,19 mm und eine Oberflächendruckspannung in mindestens einem zentralen Bereich der ersten Hauptfläche der ersten Glasscheibe im Bereich von 30,1 MPa bis 35 MPa aufweist, oder bei dem die erste Glasscheibe eine Dicke zwischen 2,2 mm und 2,49 mm und eine Oberflächendruckspannung in mindestens einem zentralen Bereich der ersten Hauptfläche der ersten Glasscheibe im Bereich von 35,1 MPa bis 45 MPa aufweist, oder bei dem die erste Glasscheibe eine Dicke zwischen 2,5 mm und 2,7 mm und eine Oberflächendruckspannung zumindest in einem zentralen Bereich der ersten Hauptfläche der ersten Glasscheibe im Bereich von 45,1 MPa bis 65 MPa aufweist, oder bei dem die erste Glasscheibe eine Dicke zwischen 2,71 mm und 6 mm und eine Oberflächendruckspannung zumindest in einem zentralen Bereich der ersten Hauptfläche der ersten Glasscheibe im Bereich von 65,1 MPa bis 150 MPa, vorzugsweise im Bereich von 65,1 MPa bis 100 MPa, aufweist, wobei die Druckspannung unter Verwendung eines Strainoptics-Laser-GASP^{™}-Geräts bestimmt wird.

9. Verfahren gemäß einem der vorhergehenden Ansprüche, bei dem die Dicke der zweiten Glasscheibe zwischen 0,3 mm und 1,0 mm beträgt; und/oder bei dem die zweite Glasscheibe chemisch gehärtet wurde; und/oder bei dem die zweite Glasscheibe chemisch so gehärtet wird, dass sie eine Oberflächendruckspannung von mehr als 400 MPa, vorzugsweise zwischen 400 MPa und 900 MPa, bevorzugter zwischen 400 MPa und 700 MPa, noch bevorzugter zwischen 450 MPa und 675 MPa, aufweist, und/oder bei dem die zweite Glasscheibe chemisch gehärtet ist, um eine Schichtdicke (DOL) zwischen 10 µm und 60 µm, vorzugsweise zwischen 25 µm und 45 µm und noch bevorzugter zwischen 30 µm und 40 µm aufzuweisen.

10. Verfahren nach einem der Ansprüche 2 bis 9, bei dem die erste und/oder die zweite Schicht des klebenden Zwischenschichtmaterials Polyvinylbutyral (PVB), akustisches modifiziertes PVB, ein Ethylen-Copolymer wie Ethylenvinylacetat (EVA), Polyurethan (PU), Polycarbonat, Polyvinylchlorid (PVC) oder ein Copolymer von Ethylen und Methacrylsäure ist, und/oder bei dem die erste und/oder die zweite Schicht des Klebstoff-Zwischenschichtmaterials eine Dicke zwischen 0,3 mm und 2,3 mm, vorzugsweise zwischen 0,3 mm und 1,6 mm, bevorzugter zwischen 0,3 mm und 0,9 mm aufweist, und/oder
bei dem die erste und die zweite Glasscheibe jeweils einen Umfang aufweisen und der Umfang der zweiten Glasscheibe an den Umfang der ersten Glasscheibe angrenzt oder der Umfang der zweiten Glasscheibe innerhalb des Umfangs der ersten Glasscheibe eingeschlossen ist, wobei vorzugsweise ein Teil des Umfangs der ersten Glasscheibe mit einem Teil des Umfangs der zweiten Glasscheibe ausgerichtet ist.

11. Verfahren nach einem der vorhergehenden Ansprüche, ferner mit dem Schritt:
vi) Bereitstellen einer Folienschicht zwischen der zweiten Glasscheibe und dem Formwerkzeug, die im Wesentlichen die gleiche Form wie die erste Glasscheibe aufweist, vor dem Verbinden.

12. Verfahren nach einem der vorhergehenden Ansprüche, bei dem das im Wesentlichen wie die erste Glasscheibe geformte Formwerkzeug aus Glas, Keramik oder Metall besteht; und/oder bei dem das im Wesentlichen wie die erste Glasscheibe geformte Formwerkzeug eine dritte Glasscheibe umfasst.

13. Verfahren nach einem der vorhergehenden Ansprüche, das ferner den folgenden Schritt umfasst:
vii) Entfernen der dritten Glasscheibe und der Folienschicht von den verbundenen ersten und zweiten Glasscheiben.

14. Zur Verwendung in einem Fahrzeug geeignete Verbundverglasung, die nach einem der Ansprüche 1 bis 13 hergestellt ist, bei der die Verbundverglasung ein Seitenfenster, ein Heckfenster oder ein Dachfenster ist.

15. Verwendung einer gemäß dem Verfahren nach einem der Ansprüche 1 bis 13 hergestellten Verbundverglasung in einem Fahrzeug.

## Revendications

1. Procédé pour préparer un vitrage feuilleté utilisable dans un véhicule, comprenant les étapes de :
i) fourniture d'une première plaque de verre ayant une première composition mise sous une forme souhaitée ayant une première épaisseur et ayant une première composition ;
ii) fourniture d'une deuxième plaque de verre pratiquement plate ayant une deuxième composition et une deuxième épaisseur, l'épaisseur de la première plaque étant différente de l'épaisseur de la deuxième plaque de verre ;
iii) fourniture d'une structure de couche intercalaire située entre les première et deuxième plaques de verre ; et
iv) fourniture d'un moule qui a une forme pratiquement identique à celle de la première plaque de verre contre la deuxième plaque de verre ; et
v) stratification ensemble des première et deuxième plaques de verre et de la couche intercalaire à une température et sous une pression suffisantes pour faire adhérer le matériau de couche intercalaire aux plaques de verre, de façon qu'après stratification la forme de la deuxième plaque de verre soit suffisamment alignée avec la forme de la première plaque de verre ; et
dans lequel la première composition de la première plaque de verre est différente de la composition de la deuxième plaque de verre.

2. Procédé selon la revendication 1, dans lequel la structure de couche intercalaire comprend :
i) au moins une première couche de matériau de couche intercalaire adhésif ;
ii) une deuxième couche de matériau de couche intercalaire ; et
iii) une feuille de support ;
et dans lequel la feuille de support est située entre les première et deuxième couches du matériau de couche intercalaire.

3. Procédé selon la revendication 1 ou 2, dans lequel les première et deuxième plaques de verre et la couche intercalaire sont stratifiées ensemble à une température située dans la plage allant de 90°C à 132°C et sous une pression située dans la plage allant de 8 à 16 bar, pour que la structure de couche intercalaire adhère aux deux plaques de verre.

4. Procédé selon l'une quelconque des revendications précédentes, dans lequel, dans l'étape v), la stratification se déroule à une température située dans la plage allant de 90°C à 110°C, tout spécialement à 95°C.

5. Procédé selon l'une quelconque des revendications 2 à 4, dans lequel la feuille de support a une rigidité supérieure à celles des première et/ou deuxième couches de matériau de couche intercalaire adhésif ; et/ou dans lequel la feuille de support est davantage stable dimensionnellement que les première et/ou deuxième couches de matériau de couche intercalaire adhésif ; et/ou dans lequel la feuille de support est plus rigide que les première et/ou deuxième couches de matériau de couche intercalaire adhésif ; et/ou dans lequel la feuille de support comprend : un polyester, en particulier du poly(téréphtalate d'éthylène) (PET), ou une plaque de verre ou un matériau de couche intercalaire ionoplaste ; et/ou dans lequel la feuille de support est monolithique ou multicouche ; et/ou dans lequel la feuille de support a une épaisseur comprise entre 50 µm et 1000 µm ; et/ou dans lequel la feuille de support est plus mince que la deuxième plaque de verre.

6. Procédé selon l'une quelconque des revendications 2 à 5, dans lequel la première couche de matériau de couche intercalaire adhésif est coextensive avec la première plaque de verre ; et/ou dans lequel la première couche de matériau de couche intercalaire adhésif est coextensive avec la feuille de support ; et/ou dans lequel la deuxième couche de matériau de couche intercalaire adhésif est coextensive avec la deuxième plaque de verre ; et/ou dans lequel la deuxième couche de matériau de couche intercalaire adhésif est coextensive avec la feuille de support.

7. Procédé selon l'une quelconque des revendications précédentes, dans lequel la première plaque de verre est une plaque de verre trempé thermiquement ou une plaque de verre semi-trempé thermiquement ; et/ou dans lequel la première plaque de verre comprend une épaisseur située dans la plage allant de 2,0 mm à 5,0 mm, ou la première plaque de verre comprend une épaisseur située dans la plage allant de 2,0 mm à 4,0 mm, ou la première plaque de verre comprend une épaisseur située dans la plage allant de 1,0 mm à 4,0 mm.

8. Procédé selon l'une quelconque des revendications 1 à 7, dans lequel la première plaque de verre a une épaisseur située dans la plage allant de 1,3 mm à 1,49 mm et une contrainte compressive en surface dans au moins une région centrale de la première surface majeure de la première plaque de verre située dans la plage allant de 18 MPa à 23 MPa, ou dans lequel la première plaque de verre a une épaisseur située dans la plage allant de 1,5 mm à 1,69 mm et une contrainte compressive en surface dans au moins une région centrale de la première surface majeure de la première plaque de verre située dans la plage allant de 23,1 MPa à 26 MPa, ou dans lequel la première plaque de verre a une épaisseur comprise entre 1,7 mm et 1,99 mm et une contrainte compressive en surface dans au moins une région centrale de la première surface majeure de la première plaque de verre située dans la plage allant de 26,1 MPa à 30 MPa, ou dans lequel la première plaque de verre a une épaisseur comprise entre 2,0 mm et 2,19 mm et une contrainte compressive en surface dans au moins une région centrale de la première surface majeure de la première plaque de verre située dans la plage allant de 30,1 MPa à 35 MPa, ou dans lequel la première plaque de verre a une épaisseur comprise entre 2,2 mm et 2,49 mm et une contrainte compressive en surface dans au moins une région centrale de la première surface majeure de la première plaque de verre située dans la plage allant de 35,1 MPa à 45 MPa, ou dans lequel la première plaque de verre a une épaisseur comprise entre 2,5 mm et 2,7 mm et une contrainte compressive en surface dans au moins une région centrale de la première surface majeure de la première plaque de verre située dans la plage allant de 45,1 MPa à 65 MPa, ou dans lequel la première plaque de verre a une épaisseur comprise entre 2,71 mm et 6 mm et une contrainte compressive en surface dans au moins une région centrale de la première surface majeure de la première plaque de verre située dans la plage allant de 65,1 MPa à 150 MPa, mieux encore dans la plage allant de 65,1 MPa à 100 MPa, moyennant quoi la contrainte compressive est déterminée par utilisation d'un instrument Strainoptics laser GASP^{™}.

9. Procédé selon l'une quelconque des revendications précédentes, dans lequel l'épaisseur de la deuxième plaque de verre est comprise entre 0,3 mm et 1,0 mm ; et/ou dans lequel la deuxième plaque de verre a été chimiquement trempée ; et/ou dans lequel la deuxième plaque de verre est chimiquement trempée pour avoir une contrainte compressive en surface supérieure à 400 MPa, de préférence comprise entre 400 MPa et 900 MPa, mieux encore comprise entre 400 MPa et 700 MPa, plus particulièrement comprise entre 450 MPa et 675 MPa, et/ou dans lequel la deuxième plaque de verre est chimiquement trempée pour avoir une profondeur de couche (DOL) comprise entre 10 µm et 60 µm, mieux encore entre 25 µm et 45 µm, plus particulièrement entre 30 µm et 40 µm.

10. Procédé selon l'une quelconque des revendications 2 à 9, dans lequel les première et/ou deuxième couches de matériau de couche intercalaire adhésif comprennent du poly(butyral de vinyle) (PVB), du PVB acoustique modifié, un copolymère d'éthylène tel que l'éthylène-acétate de vinyle (EVA), du polyuréthane (PU), du polycarbonate, du poly(chlorure de vinyle) (PVC) ou un copolymère d'éthylène et d'acide méthacrylique, et/ou dans lequel les première et/ou deuxième couches de matériau de couche intercalaire adhésif ont une épaisseur comprise entre 0,3 mm et 2,3 mm, de préférence entre 0,3 mm et 1,6 mm, mieux encore entre 0,3 mm et 0,9 mm, et/ou
dans lequel les première et deuxième plaques de verre ont chacune une périphérie, et la périphérie de la deuxième plaque de verre est contiguë à la périphérie de la première plaque de verre ou la périphérie de la deuxième plaque de verre est enfermée à l'intérieur de la périphérie de la première plaque de verre, de préférence dans lequel une portion de la périphérie de la première plaque de verre est alignée avec une portion de la périphérie de la deuxième plaque de verre.

11. Procédé selon l'une quelconque des revendications précédentes, comprenant en outre l'étape de :
vi) fourniture d'une couche de feuille entre la deuxième plaque de verre et le moule ayant pratiquement la même forme que la première plaque de verre, avant la stratification.

12. Procédé selon l'une quelconque des revendications précédentes, dans lequel le moule ayant pratiquement la même forme que la première plaque de verre est composé de verre, céramique ou métal ; et/ou dans lequel le moule ayant pratiquement la même forme que la première plaque de verre comprend une troisième plaque de verre.

13. Procédé selon l'une quelconque des revendications précédentes, comprenant en outre l'étape de :
vii) retrait de la troisième plaque de verre et de la couche de feuille à partir des première et deuxième plaques de verre stratifiées.

14. Vitrage feuilleté utilisable dans un véhicule préparé par le procédé selon l'une quelconque des revendications 1 à 13, lequel vitrage feuilleté est une vitre latérale, une lunette arrière ou un toit vitré.

15. Utilisation d'un vitrage feuilleté préparé conformément au procédé de l'une quelconque des revendications 1 à 13 dans un véhicule.
